# EUROPEAN PATENT SPECIFICATION

(11) **EP 2 668 092 B1**
(45) Date of publication and mention of the grant of the patent: **27.07.2016**
(21) Application number: 12702072.5
(22) Date of filing: 26.01.2012
(51) Int. Cl.: B64C 1/06, B64D 37/00, B64C 3/34, B64C 3/26

(54) **AIRCRAFT WING PANEL ASSEMBLY AND METHOD OF MANUFACTURING**
FLUGZEUGFLÜGELPLATTENANORDNUNG UND VERFAHREN ZU IHRER HERSTELLUNG
ENSEMBLE PANNEAU D'AILE D'AÉRONEF ET PROCÉDÉ POUR SA FABRICATION

(30) Priority: 27.01.2011 GB 201101435
(43) Date of publication of application: 04.12.2013
(73) Proprietor: Airbus Operations Limited, Bristol BS34 7PA (GB)
(72) Inventor: DOUGLAS, Paul, Filton Bristol BS99 7AR (GB); PETIT, David Patrick Stephane, Filton Bristol BS99 7AR (GB)
(74) Representative: Ribeiro, James Michael
(86) International application number: PCT/GB2012/050156
(87) International publication number: WO 2012/101439

(56) References cited:
- WO-A2-2008/133748
- DE-A1-102007 061 429
- US-A1- 2008 169 641
- US-A1- 2009 127 393

## Description

### Field of the Invention

The present invention relates to an aircraft wing panel assembly, and a method of manufacturing such an assembly, respectively claims 1 and 12.

### Background of the Invention

The core of an aircraft wing is a section called a wing box. The wing box is fared into the aircraft fuselage and runs from the wing root towards the wing tip. The wing box provides the central sections of the upper and lower aerofoil wing surfaces, in addition to attachment points for engines and control surfaces such as ailerons, trim flaps and airbrakes. The aerofoil surfaces of the wing box are provided by panels referred to as wing panels. The wing panels include a number of structural elements called stringers, which run within the wing box structure from the wing root towards the wing tip. The stringers are arranged to provide the necessary structural stability and integrity to enable the wing to cope with the operational loads experienced during flight and whilst on the ground.

The wing includes structural elements known as ribs, which run from the leading edge of the wing towards the trailing edge of the wing, thereby dividing the wing box into a plurality of cavities. Typically, the cavities house one or more fuel tanks, which may be integral to the wing box or a separate structure. The fuel tanks may be rigid in construction or non-rigid in construction employing a rubber bladder or the like.

Typically, it is necessary to transport fluids to or from the fuel tanks in the aircraft wing. For example, a fuel system provides means to transport aviation fuel to each of the one or more fuel tanks (i.e. the transported fluid is aviation fuel). Similarly, a venting system provides means for air and/or fuel vapour to enter and leave the fuel tanks (i.e. the transported fluid is air or a mixture of air and fuel vapour).

Turning specifically to venting of the fuel tanks, the venting system prevents excess stressing of the fuel tanks due to pressure differences between the internal fuel tank pressure and external atmospheric pressure (e.g. caused by refuelling, defueling, ascent or descent). The venting system typically comprises a vent box or a fuel vent line, which connects each fuel tank to a surge tank located at the outboard end of the wing. The surge tank is open to external atmosphere by connection to an inlet duct, thereby allowing air to flow into and out of the vent system. Typically, the inlet duct conforms to NACA (National Advisory Committee for Aeronautics) standards and includes a flame arrestor to prevent ignition of fuel vapour in the vent system. Fuel which enters the surge tank via the vent box or the fuel vent line (e.g. due to aircraft flight manoeuvres or thermal expansion) can be moved back into the fuel tanks if space is available.

The vent box is connected to the fuel tanks via down pipes, which are mechanically fastened to the vent box. Preferably, the down pipe enters the fuel tank at a position located at a high position above the fuel level.

Typically, the vent box is constructed from an aluminium alloy. However, some alloys are susceptible to corrosion and vent box corrosion is of particular concern due to the high level of moisture entering the vent system from the atmosphere, and the difficulties associated with internal inspection of the vent box. A typical vent box comprises several sealed sections and requires several hundred fasteners to assemble and secure the vent box to the wing structure. To assemble, seal and test a vent box of this type is time consuming and requires several inspection holes with associated cover plates and fasteners, thereby increasing the overall complexity of the venting system and weight of the aircraft.

DE102007061429 describes a stringer attached to a fuselage panel, the stringer having one or more system lines which may be used as part of a ventilation system or air conditioning system.

US20090127393 which is regarded as the closest prior art, describes using a foam core to shape a stringer and retaining the foam in the stringer as part of the structure. The foam core may have one or more channels running through it to reduce weight.

### Summary of the Invention

In accordance with one aspect of the present invention, there is provided an aircraft wing panel assembly comprising: a wing panel with an inner surface; a stringer comprising a duct member and a structural member providing an attachment surface which attaches the stringer to the inner surface of the wing panel and a packer between the duct member and the inner surface of the wing panel which caters for deviations of the inner surface of the wing panel.

In one aspect of the present invention, the stringer of the wing panel assembly is adapted to transport a fluid in an aircraft wing, the stringer comprising: a duct member providing a duct; a structural member providing an attachment surface for attachment of the stringer to a wing panel; and a downpipe for providing a fluidic connection between the duct and a fuel tank, wherein the downpipe comprises: a downpipe fitting, the downpipe fitting comprising a pipe portion and a flange portion which is shaped to fit an outer surface of the stringer; and a downpipe cover, the downpipe cover comprising an opening through which to receive the pipe portion of the downpipe fitting, wherein the downpipe cover is shaped to conform to and substantially extend beyond the flange portion of the downpipe fitting such that the downpipe cover can be fitted over the downpipe fitting and bonded to the outer surface of the stringer, thereby holding the downpipe fitting against the outer surface of the stringer.

The downpipe cover of the third aspect may be bonded to the outer surface of the stringer, for example, by secondary bonding or co-bonding or co-curing to the outer surface of the stringer.

The structural member may comprise a middle portion and a pair of flanges for attachment to the wing panel, the flanges being spaced either side of the middle portion.

The middle portion of the structural member may be shaped to receive the duct member such that the duct member is secured in position when the flanges of the structural member are attached to the wing panel.

The duct member may be substantially trapezoidal, circular or square in cross-section.

The stringer may comprise a noodle located in a void between the structural member, the duct member and the wing panel.

One or both of the duct member and structural member may be formed from a composite material. Preferably, the composite material is a carbon fibre reinforced polymer (CFRP).

In some aspects, the stringer is adapted to transport fluid to or from a fuel tank. In such aspects, the stringer may comprise an orifice providing a fluidic connection between the duct and the fuel tank.

Preferably, the downpipe cover and structural member are formed from a carbon fibre reinforced polymer (CFRP).

The stringer may be adapted to vent a fuel tank. In such aspects, the wing panel may be an upper wing panel of the aircraft wing.

Alternatively, the stringer may be adapted to provide fuel to the fuel tank. In such aspects, the wing panel is a lower wing panel of the aircraft wing.

The duct member of the second or third aspects may provide a duct and the stringer may be adapted to transport a fluid in an aircraft wing. Alternatively the duct may be used as a conduit for electrical, hydraulic, or pneumatic cables or other elongate members.

The duct member is typically elongate, defining a length direction along its length axis. Typically the deviations of the inner surface of the wing panel cause it to deviate from a straight line in the length direction at the interface between the wing panel and the stringer. Instead of shaping the duct member along its length to follow these deviations, the duct member preferably has a substantially constant cross-section along its length at least where the wing panel is deviating from a straight line, and/or the duct member has a centre line which extends along the length of the duct in a substantially straight line (so that the duct member has parallel sides) at least where the wing panel is deviating from a straight line. The packer can also cater in a similar way for deviations of the inner surface of the wing panel transverse to the length of the stringer.

The packer of the second aspect may cater for deviations of the inner surface of the wing panel by varying in thickness along its length, for instance by varying in thickness along its length such that its maximum thickness is more than 50% greater than its minimum thickness.

The packer is preferably not positioned between the flanges of the structural member and the wing panel.

The duct may have a base and a pair of rounded corners, and the packer may have a relatively thin middle portion between the base of the duct and the wing panel, and a pair of relatively thick outer portions between the rounded corners of the duct and the wing panel. The outer edges of the packer may have concave curved inner surfaces which engage the rounded corners of the duct member.

The packer may be less dense, on average, than the duct member and less dense, on average than the structural member.

The packer may be a foam packer.

The packer may be secondary bonded to the wing panel by an adhesive layer. The packer may be secondary bonded to the duct member by an adhesive layer.

The wing panel may have thickness variations which cause the deviations in its inner surface, such that thicker regions of the wing panel correspond with thinner regions of the packer, and vice versa.

The wing panel may vary in thickness such that its maximum thickness, which corresponds with a minimum thickness of the packer, is more than 50% greater than its minimum thickness, which corresponds with a maximum thickness of the packer.

The middle portion of the structural member may cater for deviations of the inner surface of the wing panel by varying in height along its length.

A further aspect of the invention provides an aircraft wing panel assembly; and a stringer according to the third aspect bonded to the wing panel.

An aircraft wing may comprise the stringer of the first or third aspect or the wing panel of the second aspect.

In accordance with a fourth aspect of the present invention, there is provided a method of manufacturing a stringer adapted to vent a fuel tank in an aircraft wing, the method comprising: forming a duct member from a composite material; positioning the duct member on a wing panel; forming a structural member from a composite material onto the duct member and wing panel; and curing the duct member and structural member, thereby bonding them to the wing panel.

In accordance with a fifth aspect of the present invention, there is provided a method of manufacturing an aircraft wing panel assembly, the method comprising: forming a duct member; positioning the duct member on an inner surface of a wing panel; providing a packer between the duct member and the wing panel to cater for deviations of the inner surface of the wing panel; forming a structural member from a composite material; positioning an attachment surface of the structural member on the inner surface of the wing panel; and curing the attachment surface of the structural member, thereby bonding it to the wing panel and securing the duct member against the wing panel.

In accordance with a sixth aspect of the present invention, there is provided a method of manufacturing an aircraft wing panel assembly, the method comprising: forming a duct member; positioning the duct member on an inner surface of a wing panel; forming a structural member from a composite material; positioning an attachment surface of the structural member on the inner surface of the wing panel; curing the structural member, thereby bonding the attachment surface to the wing panel and securing the duct member against the wing panel; fitting a flange portion of a downpipe fitting to an outer surface of the structural member; fitting a downpipe cover over the downpipe fitting; receiving a pipe portion of the downpipe fitting into an opening of the downpipe cover, wherein the downpipe cover conforms to and substantially extends beyond the flange portion of the downpipe fitting; and bonding the downpipe cover to an outer surface of the structural member, thereby holding the downpipe fitting against the outer surface of the structural member.

The downpipe cover of the sixth aspect may be bonded to the outer surface of the structural member, for example, by secondary bonding or co-bonding or co-curing to the outer surface of the structural member.

The duct member of the fifth or sixth aspects may be formed from a composite material.

Formation of the duct member may comprise laying the composite material onto a removable core or mandrel. Formation of the duct member may alternatively comprise extrusion, pultrusion or brading.

Formation of the structural member may comprise laying the composite material onto the duct member and the wing panel after the duct member has been positioned on the wing panel. Alternatively the structural member may be pre-formed together with the duct member as a unit before they are positioned at the same time on the inner surface of the wing panel. The method may further comprise positioning two pre-formed noodles either side of the duct member on the wing panel, prior to forming the structural member.

Preferably, curing of the duct member and structural member is performed using an autoclave process.

Preferably, the composite material is a carbon fibre reinforced polymer (CFRP).

The packer may be first fitted to the inner surface of the wing panel; and then the duct member positioned on the packer. Alternatively the packer and the duct member may be pre-assembled as a unit and positioned on the wing panel at the same time.

Further features and advantages of the invention will become apparent from the following description of preferred embodiments of the invention, given by way of example only, which is made with reference to the accompanying drawings.

### Brief Description of the Drawings

Figure 1 shows an aircraft wing comprising a stringer in accordance with an embodiment of the invention;
Figure 2 shows a cross-section through an aircraft wing comprising a stringer in accordance with an embodiment of the invention;
Figure 3 shows a cross-section through a stringer in accordance with an embodiment of the invention;
Figure 4 shows an exploded view of a stringer in accordance with an embodiment of the invention;
Figure 5 shows a stringer comprising a downpipe in accordance with an embodiment of the invention;
Figure 6 shows an exploded view of stringer comprising a downpipe in accordance with an embodiment of the invention;
Figures 7a to 7d illustrate an alternative manufacturing process for a wing panel assembly in accordance with an embodiment of the invention;
Figures 8 illustrates a stringer according to a further embodiment of the present invention;
Figures 9 is a transverse cross sectional view through a wing panel assembly according to a further embodiment of the present invention incorporating the stringer of Figure 8;
Figure 10 is a longitudinal cross sectional view through the wing panel assembly of Figure 9; and
Figure 11 illustrates a wing panel assembly according to a further embodiment of the present invention.

### Detailed Description of the Invention

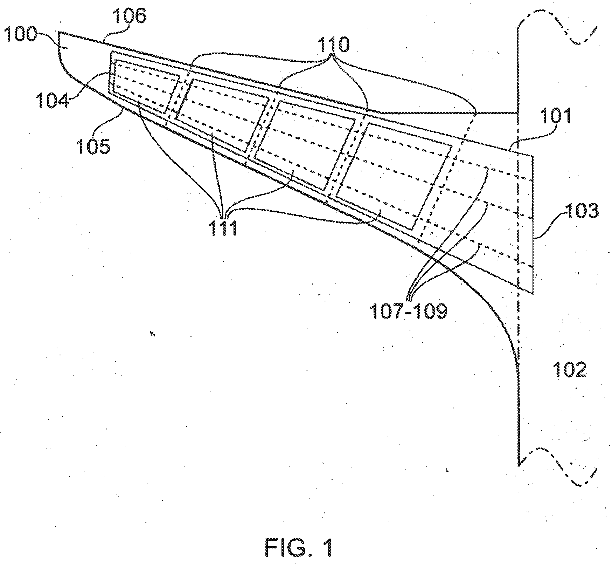

Corrosion concerns associated with stringers have minimised their use as a means to transport fluids in aircraft wings. However, recently there has been a move towards use of composite materials such as fibre reinforced polymers (e.g. carbon fibre reinforced polymer (CFRP)) for components in aircraft structures, which provide improved strength to weight characteristics whilst resisting corrosion. Thus, embodiments of the present invention provide a stringer adapted to transport a fluid in an aircraft wing. An embodiment of the invention is now described with reference to Figures 1 to 6.

Figure 1 shows a wing 100 comprising a stringer in accordance with an embodiment of the present invention. The wing 100 comprises a wing box 101, which is fared into the aircraft fuselage 102. The wing box 101 runs from the root 103 to the tip 104 of the wing 100, and between the leading edge 105 and the trailing edge 106 of the wing 100. The wing box 101 comprises a plurality of stringers 107-109, which also run from the root 103 toward the tip 104 of the wing; and a plurality of ribs 110, which run from the leading edge 105 towards the trailing edge 106 of the wing 100. Interspersed between the ribs 110 are a plurality of fuel tanks 111 for storing aviation fuel. The fuel tanks 111 are vented to the atmosphere via a venting system.

The venting system prevents excess stressing of the fuel tanks due to pressure differences between the internal fuel tank pressure and external atmospheric pressure (e.g. caused by refuelling, defueling, ascent or descent). The venting system comprises a surge tank located at the outboard end of the wing. The surge tank is open to external atmosphere by connection to an inlet duct, thereby allowing air or other gas to flow into and out of the vent system. Typically, the inlet duct conforms to NACA (National Advisory Committee for Aeronautics) standards and includes a flame arrestor to prevent ignition of fuel vapour in the vent system. Fuel which enters the surge tank (e.g. due to aircraft flight manoeuvres or thermal expansion) can be moved back into the fuel tanks if space is available.

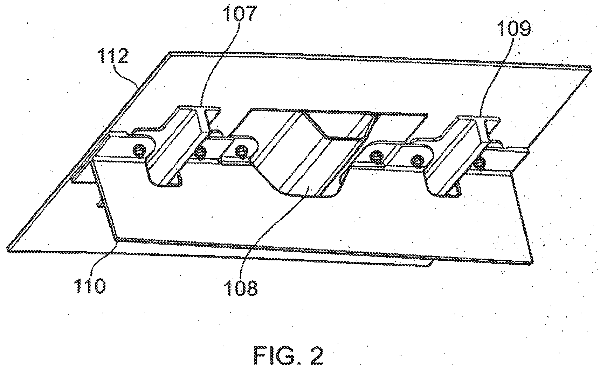

Figure 2 shows a view of the wing 100 in cross-section. Elongate stringers 107-109 are affixed to an upper CRFP wing panel 112 and a rib 110 is orientated perpendicular to the stringers 107-109 and includes a plurality of cut out sections through which the stringers 107-109 extend. Stringers 107 and 109 have a T-Blade cross-section for providing structural strength to wing 100 with low weight. Stringer 108 is of a different construction and, in addition to providing structural strength to wing 100, comprises an integral duct providing venting to fuel tanks 111.

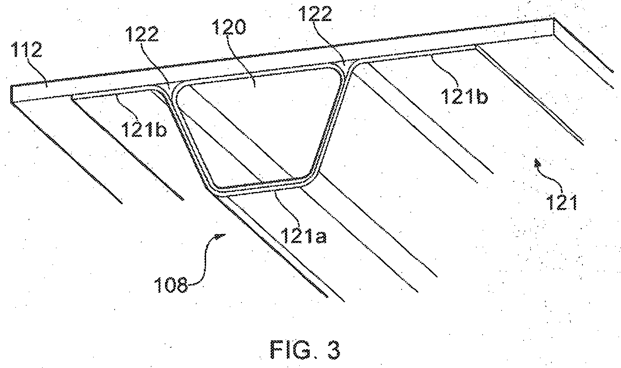

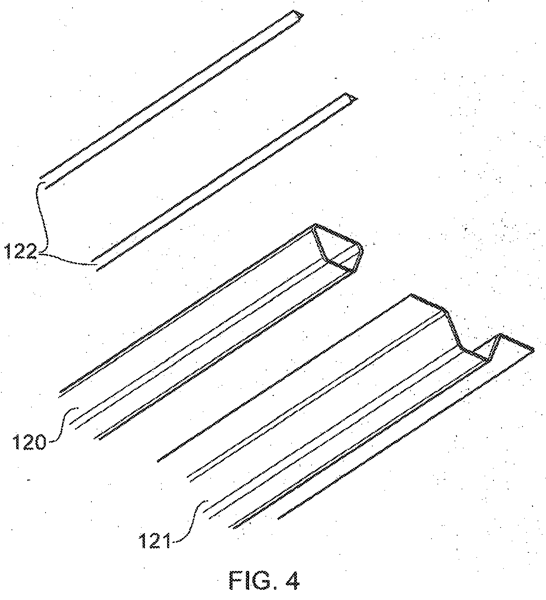

Stringer 108 is now described in more detail with reference to Figures 3 and 4, which show stringer 108 comprising a CFRP duct member 120, a CFRP structural member 121, and two CFRP noodles 122. Duct member 120 provides an elongated air duct of substantially trapezoidal cross-section. In cross-section, duct member 120 comprises a long face, a short face parallel to the long face, and two converging side faces. The corners of the trapezoidal cross-section are rounded to negate possible stress concentrations. The long face of the duct member 120 abuts the inner surface of wing panel 112.

Structural member 121 has a substantially top-hat cross section comprising a middle portion 121a and two flange sections 121b spaced either side of the middle portion 121a. The middle portion 121a comprises three sides, which are dimensioned to substantially enclose or wrap around the short face and two side faces of duct member 120. Flange members 121b abut the wing panel 112 and extend parallel to the wing panel 112 in opposing directions from the middle portion 121a. The flanges 121b are bonded to the inner surface of the panel 112, thereby securing the duct member 120 between the wing panel 112 and the structural member 121. The flanges121b are bonded to the inner surface of the panel 112 by co-curing. In an alternative embodiment, the flanges121b may be secondary bonded or co-bonded with the inner surface of the panel 112.

Two pre-formed CFRP noodles 122 are provided in the voids between the duct member 120, structural member 121 and the inner surface of wing panel 112. The CFRP noodles 122 are provided to ensure that the duct member 120 and structural member 121 maintain their shape during manufacturing.

The duct member 120 is formed by laying up CFRP plies onto an inflatable, collapsible mandrel or a thermoplastic, rubber or foam removable core. Preferably the duct member 120 is formed as a single, continuous piece. However, in some embodiments, due to its span wise length (which may be in the order of tens of metres for a typical commercial aircraft), duct member 120 may be manufactured in segments, which are subsequently joined or bonded together.

Following formation of the duct member 120, it is positioned onto the inner surface of wing panel 112 and the pre-formed CFRP noodles 122 are positioned between the corners of the duct member 120 and the inner surface of wing panel 112. Next, CFRP plies are laid up over the duct member 120 and noodles 122 to form structural member 121 and secure the duct member 120 against the wing panel 112. Alternatively, the structural member 121 can be formed on a male mandrel and assembled to duct member 120 and noodles 122 to secure duct member 120 against the wing panel 112.

Once the stringer 108 has been assembled, the complete assembly is cured in an autoclave process.

It is preferable for the duct member 120, structural member 121 and noodles 122 to be laid up as a one-piece sub-assembly and co-cured to the wing in a one shot process as described above. However, in alternative embodiments it is possible to pre-cure the duct member 120 and then co-cure the noodles 122, structural member 121 along with the cured duct member 120 to the wing inner surface 112.

In a further embodiment, the duct member 120 is formed by extrusion of CFRP or a thermoplastic. A foam (e.g. a Rohacell™ foam or similar) can be inserted between the extruded duct member 120 and the inner surface of wing panel 112. The purpose of the foam is to act as a non-structural packer, which caters for deviations of the inner surface of wing panel 112.

The stringer of the present invention provides a number of advantages over prior art vent box and stringer arrangements. In particular, the CFRP construction of the present invention alleviates corrosion concerns and permits construction of a single integrated stringer providing both structural and venting functions, whilst minimising weight. Moreover, use of CFRP obviates the need for inspection holes resulting in a reduction in complexity, component cost, assembly time, and overall aircraft weight.

With regard to the construction employed by the present embodiment, the inner duct member 120 isolates the internal vent pressure from the structural member 121, thereby minimising the peeling forces exerted on the structural member flanges 121b. Such forces are due to a positive pressure within the venting system, which, in the absence of the duct member 120, would act to peel the flanges 121b from the inner surface of wing panel 112.

The stringer 108 transports fluid from the fuel tanks 111 to the surge tank. In order to communicate with a plurality of fuel tanks 111 the stringer 108 comprises a plurality of orifices to which are connected a plurality of downpipe assemblies, each downpipe assembly leading into a respective one of the tanks 111 to provide fluidic connection between the stringer 108 and the fuel tanks 111. Preferably, each downpipe enters the fuel tank at a position located at a high position above the fuel level.

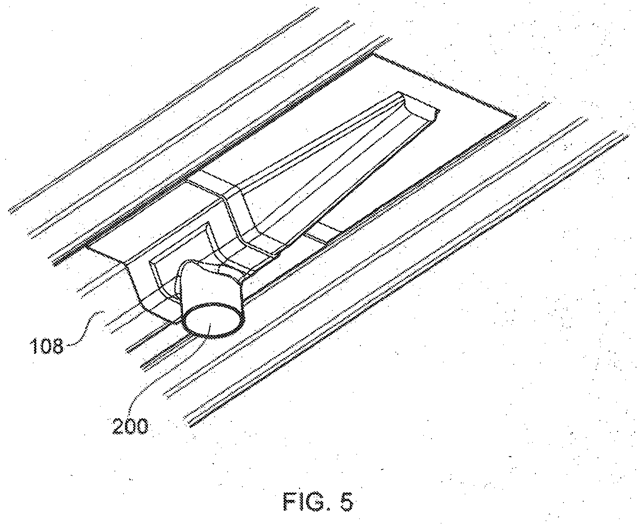

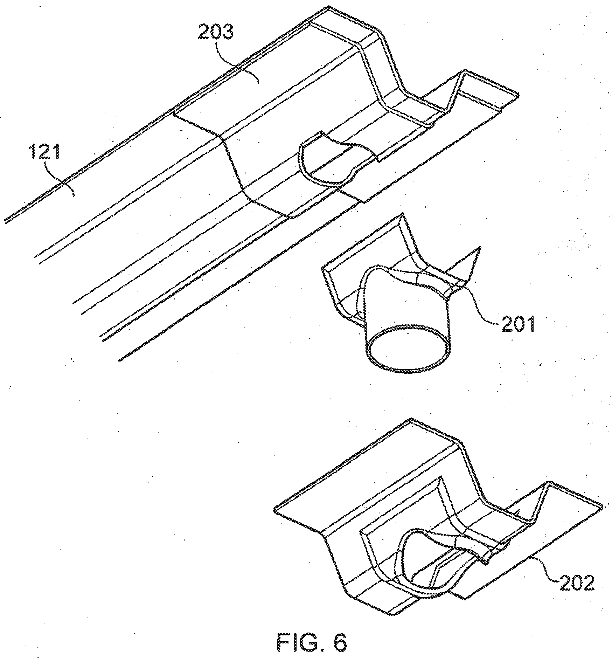

With reference to Figures 5 and 6, a downpipe assembly 200 comprises a pre-formed thermoplastic downpipe fitting 201 and a CFRP downpipe cover 202. The thermoplastic downpipe fitting 201 is pre-formed and provides a fluidic connection between the stringer 108 and the fuel tanks 111. The downpipe cover 202 fits over the downpipe fitting 201 and overlaps the fitting 201 such that it can be bonded, for example by secondary bonding or co-bonding or co-curing, directly to the outer surface of structural member 121 of the stringer 108, thereby securing the downpipe fitting 201 in position. Use of CFRP for the downpipe cover 202 ensures that the structural integrity of the stringer in the area surrounding each orifice is maintained. In some embodiments, additional CFRP 203 is laid up on structural member 121 around the downpipe orifice region in stringer 108 to provide additional strength.

The downpipe assembly 200 is manufactured by positioning the pre-formed thermoplastic downpipe fitting 201 over the orifice in stringer 108. Accurate positioning of the thermoplastic downpipe fitting 201 can be achieved by first fitting a tooling spigot to provide a positional reference. The downpipe fitting 201 is then secondary bonded or paste bonded to the structural member 121 of stringer 108. The (pre-cured) CFRP downpipe cover 202 is placed over the downpipe fitting 201 and secondary bonded or paste bonded to the thermoplastic downpipe fitting 201 and structural member 121 of stringer 108.

Note that the downpipe assembly 200 can be fitted to the stringer after the stringer has been fitted to the wing panel.

In an alternative embodiment, the thermoplastic downpipe fitting 201 and the (uncured or partially cured) CFRP downpipe cover 202 can be located on the tooling spigot and co-cured with the stringer 108. This downpipe construction eliminates the need for fasteners (and their associated galvanic corrosion issues), reduces assembly time and reduces weight.

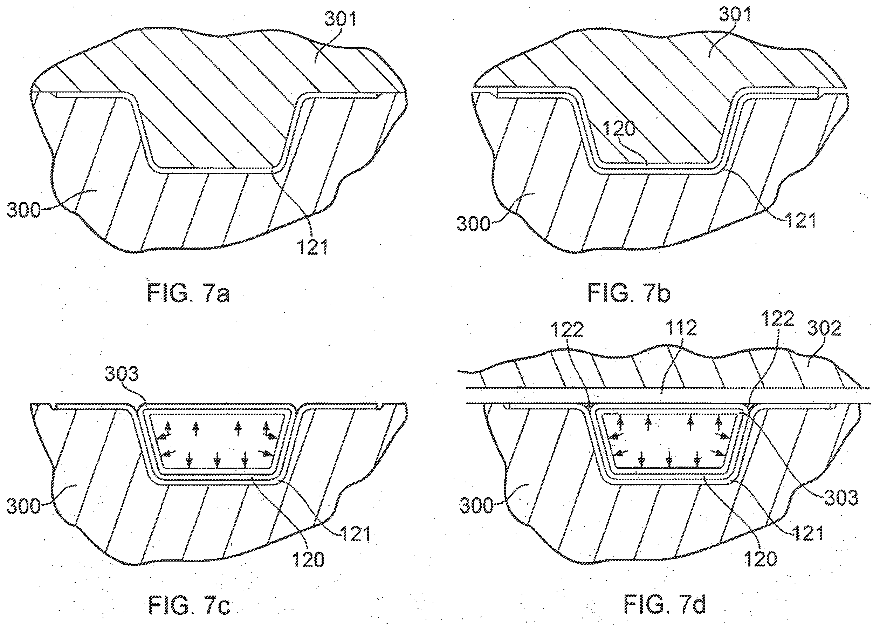

The structural member 121 can be formed between a female tool 300 and a male form tool 301, as indicated in Figure 7a. The material of the duct member 120 is then laid onto the formed structural member 121, and the male form tool 301 is used to form the short face and the converging side faces of the duct member, as shown in Figure 7b, thereby creating an open duct having a channel formed between the short face and the converging side faces of the duct member. A pressurised rubber mandrel 303 is then inserted into the open channel and the material of the duct member 120 is folded over the mandrel to form the closed cross section of the duct member, as shown in Figure 7c. The noodles 122 are then inserted and the stringer assembly is held by the female tool 300 against the inner surface of the wing panel 112. The structural member and duct member are then co-bonded to or co-cured with the wing panel 112, as shown in Figure 7d, between the female tool 300 and an outer mould line tool 302.

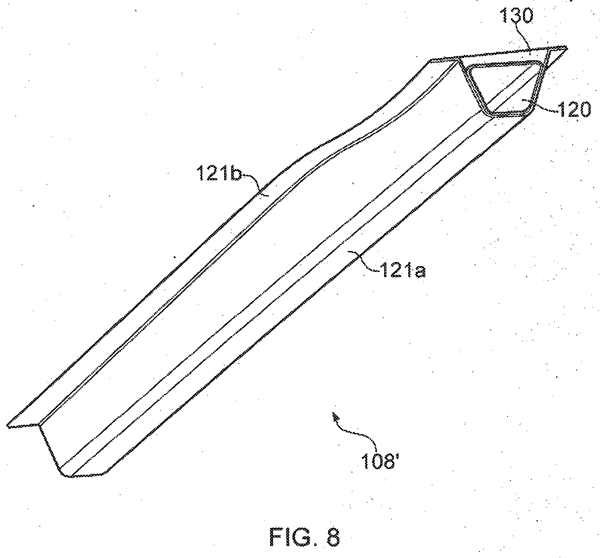

Figure 8 illustrates a stringer 108' according to a further embodiment of the present invention. Certain parts of the stringer 108' are equivalent to the parts described in Figures 1-4 and in this case the same reference numbers are used.

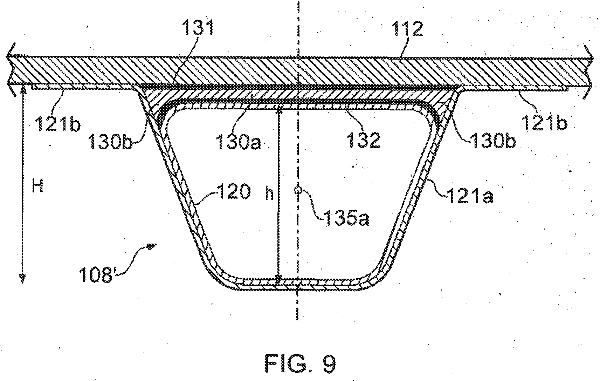

Figure 9 is a cross-sectional view through a wing panel assembly incorporating the stringer 108'. The cross-section is taken across the width of the stringer. Stringer 108' comprises a CFRP duct member 120, a CFRP structural member 121a,b, and a non-structural packer or packing layer 130a,b. The duct member 120 and structural member 121a,b are arranged similarly to the duct member 120 and structural member 121 as already described. The packing layer 130 comprises a foam, for example a Rohacell™ foam or similar, and is disposed between the duct member 120 and the inner surface of wing panel 112. The foam is less dense on average than the structural member 121a,b and the duct member 120 to minimise the weight of the stringer 108'.

The packing layer comprises a relatively thin middle portion 130a between the base of the duct member 120 and the wing panel 112, and a pair of relatively thick outer portions 130b between the rounded corners of the duct member and the wing panel. The outer portions of the packing layer 130 have concave curved inner surfaces which engage the rounded corners of the duct member 120, thereby eliminating the need for separate noodles as used in previously described embodiments.

The packing layer is not positioned between the flanges 121b of the structural member 121 and the wing panel 112 so that the flanges 121b may be directly cured to the inner surface of the wing panel 112. The packing layer 130a,b is secondary bonded to the wing panel 112 and to the base of the duct member 120 (i.e. the face which is closest to the wing panel 112) by respective layers of paste adhesive 131 and 132.

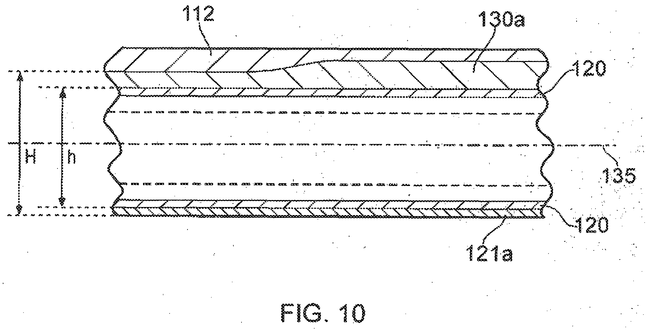

The inner surface of the wing panel 112 experiences deviations from a straight line along the length of the stringer 108' at the interface where it meets the stringer. These deviations may be caused by contouring of the panel (maintaining its thickness) and/or or by variations in the thickness of the wing panel. Variation in thickness of the wing panel 112 is illustrated in Figure 10 which is a cross sectional view taken along the length of the stringer through its centre where it interfaces with the stringer. Note that Figure 10 shows an abrupt change in thickness which is exaggerated for purposes of illustration. In practice the change in thickness will vary more gradually. Also the thickness of the panel 112 is shown as decreasing monotonically along the length of the stringer, but in practice the thickness may undulate along the length of the stringer - that is, it might increase and decrease a number of times. The maximum thickness of the panel 112 may be up to twice its minimum thickness.

The packing layer 130a varies in thickness along its length according to the deviations of the inner surface of the wing panel 112. The thickness may vary between a minimum thickness of approximately 5mm and a maximum thickness of approximately 22mm. The variations in the thickness of the packing layer 130 along its length cater for deviations of the inner surface of the wing panel 112 (i.e. thicker regions of the wing panel correspond with thinner regions of the packing layer and vice versa). The structural member also caters for deviations of the inner surface of the wing panel 112, changing its height "H" (i.e. the overall height of the stringer 108' from the inner surface of the wing panel) by changing the height of the middle portion 121a. In this way the duct member does not need to be shaped to follow the deviations of the inner surface of the wing panel 112. That is, the height "h" (and cross section profile) of the duct member 120 can be substantially constant along its length, including those parts of its length where there are deviations in the inner surface of the wing panel. The centre line 135 of the duct member, passing through the geometric centre 135a of the duct section, also extends in a substantially straight line so the sides of the duct are parallel as shown in Figure 10, even where there are deviations in the inner surface of the wing panel.

The duct member 120 is typically formed by extrusion of CFRP. In a further embodiment, the duct member 120 may be formed by extrusion of a thermoplastic, or by laying up CFRP plies onto an inflatable, collapsible mandrel or a thermoplastic, rubber or foam removable core.

Following formation of the packing layer 130a,b by machining or thermoforming, the packing layer is positioned onto the inner surface of wing panel 112 with a layer of paste adhesive 131 provided at the interface to secondary bond the packing layer to the wing panel. The duct member 120 is then arranged on the packing layer 130a,b with a layer of paste adhesive 132 provided at the interface to secondary bond the packing layer to the duct member. Next, CFRP plies are laid up over the duct member 120 and packing layer 130 to form structural member 121a,b and secure the duct member 120 against the wing panel 112. Once the stringer 108' has been assembled, the complete assembly is cured in an autoclave process.

Alternatively, the structural member 121a,b may be formed on a male mould tool and positioned over the packing layer 130 and duct member 120 which have been assembled on the wing panel 112. Alternatively, the structural member 121 and the duct member 120 may be formed using a male mould tool and a pressurised mandrel (as indicated in Figures 7a and 7b) and the structural member 121 and the duct member 120 may then be arranged on the inner surface of the wing panel 112.

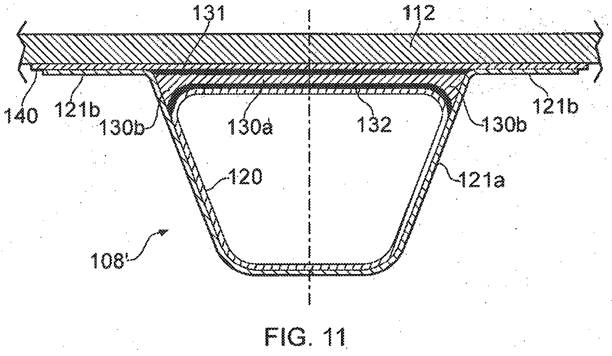

Figure 11 illustrates a wing panel assembly according to a further embodiment of the present invention. Certain parts of the assembly are equivalent to the parts described in Figure 9 and in this case the same reference numbers are used.

The wing panel assembly is similar to the assembly shown in Figures 8 and 9, but in this case the wing panel further comprises a closing ply 140 which forms the interface between the wing panel and the stringer. The closing ply 140 is a CFRP layer which is laid up on the panel before the stringer 108' is attached as described above.

Whilst the embodiments described above employ CFRP for the duct member 120, structural member 121 and noodles 122, it will be appreciated that different material combinations can be used. For example, the duct member 120 may be formed from a thermoplastic whilst the structural member 121 is formed from a composite material such as CFRP. Similarly, a material other than a Rohacell™ foam may be used to form the packing layer 130, for example another type of foam, or a material which is not a foam.

The embodiments described above relate to a stringer of the wing assembly adapted to vent one or more fuel tanks in an aircraft wing (i.e. the transported fluid is air and/or fuel vapour). In alternative embodiments, the stringer 108 may instead be used in an aircraft fuelling system to transport fuel to the aircraft fuel tanks. In such embodiments, isolation of the fuel pressure from the structural member 121 (by virtue of the duct member 120) is particularly advantageous in view of the high pressures that can be encountered during aircraft fuelling. Where the stringer is adapted to provide fuel to the fuel tanks, the stringer will typically be attached to a lower wing panel of the aircraft wing. In other embodiments, the stringer may be adapted to transport water, oxygen or any other fluid. In other embodiments, the duct may be used as a conduit for electrical, hydraulic, or pneumatic cables or other elongate members.

The above embodiments are to be understood as illustrative examples of the invention. Further embodiments of the invention are envisaged. For example, alternative geometries could be used for the duct member 120 cross-section (e.g. circular or rectangular).

## Claims

1. An aircraft wing panel assembly comprising: a wing panel (112) with an inner surface; and a stringer comprising a duct member (120) and a structural member (121) providing an attachment surface which attaches the stringer to the inner surface of the wing panel; wherein the panel assembly also comprises a packer (130) between the duct member and the inner surface of the wing panel which caters for deviations of the inner surface of the wing panel.

2. An assembly according to claim 1, wherein the packer (130) caters for deviations of the inner surface of the wing panel (112) by varying in thickness along its length.

3. An assembly according to claim 2, wherein the packer (130) caters for deviations of the inner surface of the wing panel (112) by varying in thickness along its length such that its maximum thickness is more than 50% greater than its minimum thickness.

4. An assembly according to any preceding claim, wherein the structural member (121) comprises a middle portion (121a) and a pair of flanges (121b) for attachment to the wing panel (112), the flanges being spaced either side of the middle portion wherein the middle portion of the structural member is shaped to receive the duct member (120) such that the duct member is secured in position by the middle portion.

5. An assembly according to claim 4, wherein the middle portion (121a) of the structural member (121) caters for deviations of the inner surface of the wing panel (112) by varying in height along its length.

6. An assembly according to claim 4 or claim 5, wherein the packer (130) is not positioned between the flanges (121b) of the structural member (121) and the wing panel (112).

7. An assembly according to any preceding claim, wherein the packer (130) is a foam packer.

8. An assembly according to any preceding claim, wherein the packer (130) is secondary bonded to the wing panel (112) by an adhesive layer (131) and/or secondary bonded to the duct member by an adhesive layer (132).

9. An assembly according to any preceding claim, wherein the wing panel (112) has thickness variations which cause the deviations in its inner surface, such that thicker regions of the wing panel correspond with thinner regions of the packer (130), and vice versa.

10. An assembly according to any preceding claim, wherein the duct member (120) provides a duct.

11. An assembly according to any preceding claim, wherein the stringer is adapted to transport a fluid in an aircraft wing.

12. A method of manufacturing an aircraft wing panel assembly, the method comprising:
forming a duct member (120); positioning the duct member on an inner surface of a wing panel (112); forming a structural member (121) from a composite material;
positioning an attachment surface of the structural member on the inner surface of the wing panel; and curing the attachment surface of the structural member, thereby bonding it to the wing panel and securing the duct member against the wing panel;
**characterised by** providing a packer between the duct member and the wing panel to cater for deviations of the inner surface of the wing panel.

13. A method according to claim 12 wherein the duct member (120) is formed by extrusion, pultrusion or brading.

14. A method according to claim12 or claim 13, wherein the packer (130) is first fitted to the inner surface of the wing panel (112); and then the duct member (120) is positioned on the packer after the packer has been fitted.

15. A method according to any one of claims 12 to 14, further comprising curing the duct member (120), thereby bonding it to the wing panel.

## Patentansprüche

1. Flugzeugflügelpaneel-Anordnung, umfassend: ein Flügelpaneel (112) mit einer inneren Oberfläche und ein Stringer, umfassend ein Kanalelement (120) und ein Strukturelement (121), das eine Anbringungsfläche bereitstellt, welche den Stringer an der inneren Oberfläche des Flügelpaneels anfügt, wobei die Paneel-Anordnung zudem einen Packer (130) zwischen dem Kanalelement und der inneren Oberfläche des Flügelpaneels umfasst, welcher Abweichungen der inneren Oberfläche des Flügelpaneels ausgleicht.

2. Anordnung nach Anspruch 1, wobei der Packer (130) Abweichungen der inneren Oberfläche des Flügelpaneels (112) durch Änderung der Dicke entlang seiner Länge ausgleicht.

3. Anordnung nach Anspruch 2, wobei der Packer (130) Abweichungen der inneren Oberfläche des Flügelpaneels (112) durch Änderung der Dicke entlang seiner Länge derart ausgleicht, dass seine maximale Dicke mehr als 50 % größer als seine minimale Dicke ist.

4. Anordnung nach einem der vorherigen Ansprüche, wobei das Strukturelement (121) einen Mittelteil (121a) und ein Flanschpaar (121b) zur Anbringung am Flügelpaneel (112) umfasst, wobei die Flansche beiderseits des Mittelteils beabstandet sind, wobei der Mittelteil des Strukturelements so geformt sind, das Kanalelement (120) derart aufzunehmen, dass das Kanalelement durch den Mittelteil in Position fixiert wird.

5. Anordnung nach Anspruch 4, wobei der Mittelteil (121a) des Strukturelements (121) Abweichungen der inneren Oberfläche des Flügelpaneels (112) durch Änderung der Dicke entlang seiner Länge ausgleicht.

6. Anordnung nach Anspruch 4 oder Anspruch 5, wobei der Packer (130) nicht zwischen den Flanschen (121b) des Strukturelements (121) und dem Flügelpaneel (112) angeordnet ist.

7. Anordnung nach einem der vorherigen Ansprüche, wobei der Packer (130) ein Schaumstoffpacker ist.

8. Anordnung nach einem der vorherigen Ansprüche, wobei der Packer (130) zusätzlich am Flügelpaneel (112) durch eine Klebeschicht (131) verklebt und/oder zusätzlich am Kanalelement eine Klebeschicht (132) verklebt ist.

9. Anordnung nach einem der vorherigen Ansprüche, wobei das Flügelpaneel (112) Dickenschwankungen aufweist, welche die Abweichungen in seiner inneren Oberfläche derart verursachen, dass dickere Bereiche des Flügelpaneels dünneren Bereichen des Packers (130) entsprechen und umgekehrt.

10. Anordnung nach einem der vorherigen Ansprüche, wobei das Kanalelement (120) einen Kanal bereitstellt.

11. Anordnung nach einem der vorherigen Ansprüche, wobei der Stringer dazu geeignet ist, ein Fluid in einem Flugzeugflügel zu transportieren.

12. Verfahren zur Herstellung einer Flugzeugflügelpaneel-Anordnung, wobei das Verfahren umfasst: Formen eines Kanalelements (120), Anordnen des Kanalelements auf der inneren Oberfläche eines Flügelpaneels (112), Formen eines Strukturelements (121) aus einem Verbundmaterial, Anordnen einer Anbringungsfläche des Strukturelements auf der inneren Oberfläche des Flügelpaneels und Aushärten der Anbringungsfläche des Strukturelements, dadurch dessen Verkleben mit dem Flügelpaneel und Fixieren des Kanalelements gegen das Flügelpaneel, **gekennzeichnet durch** Bereitstellen eines Packers zwischen dem Kanalelement und dem Flügelpaneel, um Abweichungen der inneren Oberfläche des Flügelpaneels auszugleichen.

13. Verfahren nach Anspruch 12, wobei das Kanalelement (120) durch Strangpressen, Strangziehen oder Flechten geformt wird.

14. Verfahren nach Anspruch 12 oder Anspruch 13, wobei der Packer (130) zuerst auf die innere Oberfläche des Flügelpaneels (112) aufgesetzt wird und dann das Kanalelement (120) auf dem Packer angeordnet wird, nachdem der Packer aufgesetzt wurde.

15. Verfahren nach einem der Ansprüche 12 bis 14, ferner umfassend das Aushärten des Kanalelements (120), wodurch es mit dem Flügelpaneel verklebt wird.

## Revendications

1. Ensemble panneau d'aile d'aéronef comprenant :
un panneau d'aile (112) avec une surface interne ; et une lisse comprenant un organe de conduit (120) et un organe structural (121) fournissant une surface de fixation qui fixe la lisse à la surface interne du panneau d'aile ; dans lequel l'ensemble panneau comprend également une garniture d'étanchéité (130) entre l'organe de conduit et la surface interne du panneau d'aile qui satisfait les écarts de la surface interne du panneau d'aile.

2. Ensemble selon la revendication 1, dans lequel la garniture d'étanchéité (130) satisfait les écarts de la surface interne du panneau d'aile (112) en faisant varier l'épaisseur le long de sa longueur.

3. Ensemble selon la revendication 2, dans lequel la garniture d'étanchéité (130) satisfait les écarts de la surface interne du panneau d'aile (112) en faisant varier l'épaisseur le long de sa longueur, de sorte que son épaisseur maximale soit supérieure de plus de 50 % à son épaisseur minimale.

4. Ensemble selon l'une quelconque des revendications précédentes, dans lequel l'organe structural (121) comprend une partie médiane (121a) et une paire de brides (121b) pour une fixation au panneau d'aile (112), les brides étant espacées de chaque côté de la partie médiane, dans lequel la partie médiane de l'organe structural est façonnée pour recevoir l'organe de conduit (120), de sorte que l'organe de conduit soit assujetti en position par la partie médiane.

5. Ensemble selon la revendication 4, dans lequel la partie médiane (121a) de l'organe structural (121) satisfait les écarts de la surface interne du panneau d'aile (112) en faisant varier la hauteur le long de sa longueur.

6. Ensemble selon la revendication 4 ou la revendication 5, dans lequel la garniture d'étanchéité (130) n'est pas positionnée entre les brides (121b) de l'organe structural (121) et le panneau d'aile (112).

7. Ensemble selon l'une quelconque des revendications précédentes, dans lequel la garniture d'étanchéité (130) est une garniture d'étanchéité en mousse.

8. Ensemble selon l'une quelconque des revendications précédentes, dans lequel la garniture d'étanchéité (130) est accessoirement liée au panneau d'aile (112) par une couche d'adhésif (131) et/ou est accessoirement liée à l'organe de conduit par une couche d'adhésif (132).

9. Ensemble selon l'une quelconque des revendications précédentes, dans lequel le panneau d'aile (112) présente des variations d'épaisseur qui provoquent les écarts de sa surface interne, de sorte que des régions plus épaisses du panneau d'aile correspondent à des régions plus fines de la garniture d'étanchéité (130), et vice versa.

10. Ensemble selon l'une quelconque des revendications précédentes, dans lequel l'organe de conduit (120) fournit un conduit.

11. Ensemble selon l'une quelconque des revendications précédentes, dans lequel la lisse est adaptée pour transporter un fluide dans une aile d'aéronef.

12. Procédé de fabrication d'un ensemble panneau d'aile d'aéronef, le procédé comprenant : la formation d'un organe de conduit (120) ; le positionnement de l'organe de conduit sur une surface interne d'un panneau d'aile (112) ; la formation d'un organe structural (121) à partir d'un matériau composite ; le positionnement d'une surface de fixation de l'organe structural sur la surface interne du panneau d'aile ; et le durcissement de la surface de fixation de l'organe structural, la liant ainsi au panneau d'aile et assujettissant l'organe de conduit contre le panneau d'aile ; **caractérisé par** la fourniture d'une garniture d'étanchéité entre l'organe de conduit et le panneau d'aile pour satisfaire les déviations de la surface interne du panneau d'aile.

13. Procédé selon la revendication 12, dans lequel l'organe de conduit (120) est formé par extrusion, pultrusion ou toronage.

14. Procédé selon la revendication 12 ou la revendication 13, dans lequel la garniture d'étanchéité (130) est tout d'abord montée sur la surface interne du panneau d'aile (112) ; puis l'organe de conduit (120) est positionné sur la garniture d'étanchéité après que la garniture d'étanchéité a été montée.

15. Procédé selon l'une quelconque des revendications 12 à 14, comprenant en outre le durcissement de l'organe de conduit (120), le liant ainsi au panneau d'aile.
